# EUROPEAN PATENT SPECIFICATION

(11) **EP 0 998 964 B1**
(45) Date of publication and mention of the grant of the patent: **31.03.2004**
(21) Application number: 99308639.6
(22) Date of filing: 01.11.1999
(51) Int. Cl.: A63F 13/00, A63F 7/02

(54) **Gaming machine**
Spielgerät
Appareil de jeu

(30) Priority: 02.11.1998 JP 31222898
(43) Date of publication of application: 10.05.2000
(73) Proprietor: Aruze Corporation, Tokyo (JP)
(72) Inventor: Shimizu, Shingo, Koutou-ku, Tokyo (JP)
(74) Representative: Nicholls, Michael John

(56) References cited:
- DE-A- 4 137 111
- US-A- 4 438 926
- PATENT ABSTRACTS OF JAPAN vol. 1998, no. 03, 27 February 1998 (1998-02-27) & JP 09 285608 A (FUJI SHOJI KK), 4 November 1997 (1997-11-04)
- PATENT ABSTRACTS OF JAPAN vol. 1998, no. 03, 27 February 1998 (1998-02-27) & JP 09 299549 A (SANYO ELECTRIC CO LTD), 25 November 1997 (1997-11-25)
- PATENT ABSTRACTS OF JAPAN vol. 1999, no. 01, 29 January 1999 (1999-01-29) & JP 10 263203 A (TAITO CORP), 6 October 1998 (1998-10-06)

## Description

The present invention relates to a gaming machine, such as a pachinko game machine, which is provided with a symbol display arrangement for variably displaying a plurality of symbols necessary for a game and a controller such as a microcomputer for controlling the variable display of the symbol display arrangement.

A pachinko game machine which is a kind of a ball-shooting gaming machine, for example, is provided with a symbol display arrangement that is arranged to start variation display of symbols when a predetermined condition is satisfied. If the variation display of symbols is stopped to form a predetermined combination of symbols, a player can obtain profits. In recent years, an electric display unit such as a liquid crystal display is popularly used as the symbol display arrangement due to the possibility of various demonstration effects.

By using such electric display unit, for example, it is possible to carry out the followings:
a real-time indication of times of open of a variable winning device converted into an open state or condition that is profitable for a player when the variable display is stopped in a specified combination of symbols (e.g. "big hit");
a real-time indication of number of playing balls that entered the variable winning device; or
an indication of background in different color from usual when the stopped display indicates a specified pattern or symbols in order to demonstrate "big hit" excitingly.

Also, it becomes possible to carry out various indications or demonstrations for increasing interests of a player. For example, when "big hit" can be obtained if one more special symbol will be arranged (that is, "reach state"), an indication of pattern with unusual motion makes a player recognize that "big hit" will appear soon.

In particular, one of useful demonstrations to enhance interest of a player is a pattern or symbol variation display in the "reach state", that is called "reach action". When the reach action begins, a player will pay attention to indication of the display to expect an appearance of "big hit". As examples of "reach action", a speed of pattern or symbol variation display is different from usual speed, a time length of symbol variation is changed, and so on. The special reach action sometimes indicates an appearance of "big hit" in 100%. Thus, such reach action is a predictive indication to make a player expect an appearance of "big hit".

Further, in the gaming machine that makes demonstration display such as "reach action", it has been main to perform the demonstration display by means of any symbols (or characters) other than the varying symbols in addition to the symbol variation.

In recent years, there has been provided a gaming machine which can carry out various predictive displays (that is, "prognostic display") even before the reach state appears. Such display can inform a player that "big hit" is coming as well as the reach action. Also, such display can make a player predict whether or not it will transfer to a specified reach action (that is, "probability of development into reach state").

According to such displays, it is possible to perform not only the prediction of appearance of "big hit" but also a variety of demonstrations resulting in enhancement of interest in the whole game.

There has been raised a problem that it takes more time to understand contents of game because such demonstration displays tend to increase contents more and more. Therefore, in a game hall, sometimes brief explanation illustrates characters or contents of game by means of printed matter to assist a player to understand the contents of game or select a suitable gaming machine.

However, such explanation indicates only a part of game contents, and it is not given on every gaming machines but in only one place of the hall. Therefore, it is hard to say that such explanation assists a player to understand the contents of game enough.

In Japanese Patent Laid-Open Publication No. 9-94334, there is disclosed a gaming machine having a display arrangement for variably displaying symbols, that can display a situation of "reach state" established up to the present time since the last "big hit" in a part of display screen of the display arrangement. However, this informs only results of "reach state" establishment and it does not provide a commentary information such as an explanation of game contents.

Document DE-A-4 137 111 relates to a jackpot gaming machine. The gaming machine includes a display arrangement for displaying varying symbols. The display arrangement can show game play advice or advertising. Document DE-A-4 137 111 contemplates displaying this game play advice or advertising during a break in play. However, the game play advice cannot easily be provided at the request of the user. Should the machine be in continuous use, or should a user wish to access information on how to proceed during a game, the apparatus of document DE-A-4 137 111 would not be able to display any instruction.

An object of the present invention is to provide a gaming machine having a display arrangement for displaying symbols related to a game, in which the display arrangement can be used for providing commentary information of the game.

In accordance with the present invention, there is provided a gaming machine having a display arrangement for displaying symbols related to a game, the symbols including varying special symbols for indicating transfer to special game state when the varying special symbols stop to produce a predetermined stop pattern, wherein
the display arrangement is arranged to display not only the symbols but also commentary information of the game;
characterised in that said symbol include predictive symbols for predicting appearance of the stop pattern;
and wherein the commentary information comprises a plurality of display contents that can be changed by a predetermined display instruction;
the gaming machine further comprising a plurality of switches which produce said display instruction.

Therefore, it is possible to provide more information that can help understanding of contents of game and to communicate a fundamental concept of game in the display arrangement to a player with ease. If a player is a beginner, he or she can understand the contents of game sufficiently and attend the game. By using such a display instruction, a player can watch the commentary information at any time when he or she desires. A player can select the commentary information that he or she wants to know by change of the display contents. Further, because the display instruction is produced by a plurality of operable switches corresponding to each of the display contents, a player can easily produce the display instruction and quickly obtain the commentary information that he or she wants to know.

In an embodiment of the invention, the commentary information is displayed in a predetermined time interval when the game is not carried out in the display arrangement A player can learn contents of game with use of duration when the game is not played in the display arrangement.

In another embodiment of the invention, the display arrangement starts display of the commentary information when the game is not carried continuously in a predetermined time period and the display arrangement stops the display of the commentary information when the game is started. Thus, the commentary information can be displayed without waste of time.

In other embodiment of the invention, the commentary information is optional one of performance of the game, explanation about a concept of the game, explanation about a process of the game, explanation about prognostic display, explanation about reach display, explanation about likelihood of "big hit" that is indicated by the prognostic display and the reach display, explanation about symbols to be displayed, and other information of the game. From such commentary information, a player can understand detail of the game with ease.

The invention will be further described by way of example with reference to the accompanying drawings, in which:
Fig. 1 shows a front gaming portion of a pachinko game machine according to an embodiment of the invention;
Fig. 2 is a front view of a liquid crystal display;
Fig. 3 is a front view of the pachinko game machine having commentary display switches;
Fig. 4 is a perspective view of an upper tray provided with the commentary display switches;
Fig. 5 is a table showing contents of three commentary information groups;
Fig. 6 shows a display of "explanation about concept of game";
Fig. 7 shows a display of "introduction of a character";
Fig. 8 shows a display of "explanation about a flow of game";
Fig. 9 shows a display of "performance information of a gaming machine";
Fig. 10 shows a display of "explanation about word prognostic";
Fig. 11 shows a display of "word prognostic list";
Fig. 12 shows a display of "explanation about action prognostic";
Fig. 13 shows a display of "action prognostic symbol";
Fig. 14 shows a display of "explanation about reach demonstration symbol";
Fig. 15 is a block diagram of constitution of electric circuit portions of the pachinko game machine;

A pachinko game machine that is an embodiment of the present invention will be explained in detail below.

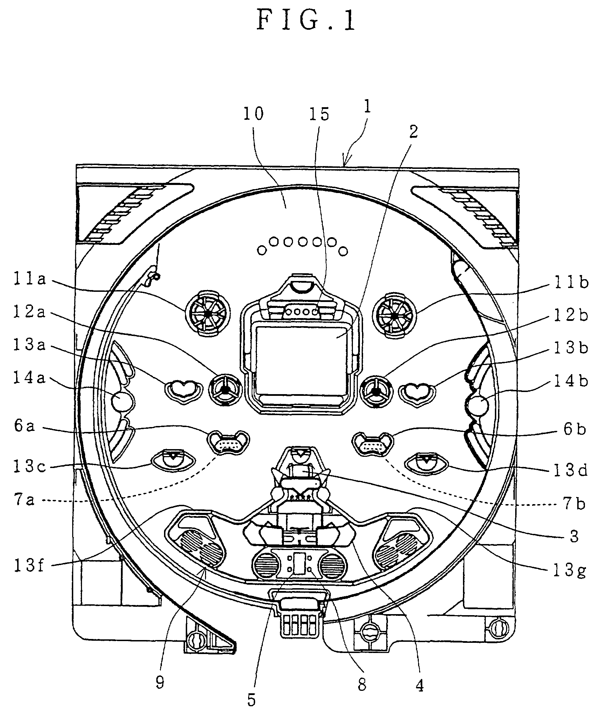

Fig. 1 shows a front view of a game board face 10 of a pachinko game machine 1. A liquid crystal display 2 as a symbol display arrangement is provided in the center of the game board face 10. The liquid crystal display 2 is arranged to variably display a plurality of symbols expressed by pictures to simulate three rows of rotatable reels of a slot machine. Each of these symbols to be variably displayed is called "special symbol". If variation of the special symbols stops at a predetermined stop pattern (for example, "7-7-7" called "big hit"), then state of game transfers to a special game state that is advantageous to a player. The special game state will be explained hereinafter.

The liquid crystal display 2 displays "prognostic demonstration" symbols and "reach demonstration" symbols during variation display of the special symbol. The prognostic demonstration symbols are for predicting that the special symbol will stop at a predetermined stop pattern to indicate transfer to the special game state, or that the display will develop into a special "reach action". The reach demonstration symbol indicates "reach state" that a predetermined stop pattern may be produced if one more special symbol is stopped. These prognostic demonstration and reach demonstration symbols are expressed with various pictures.

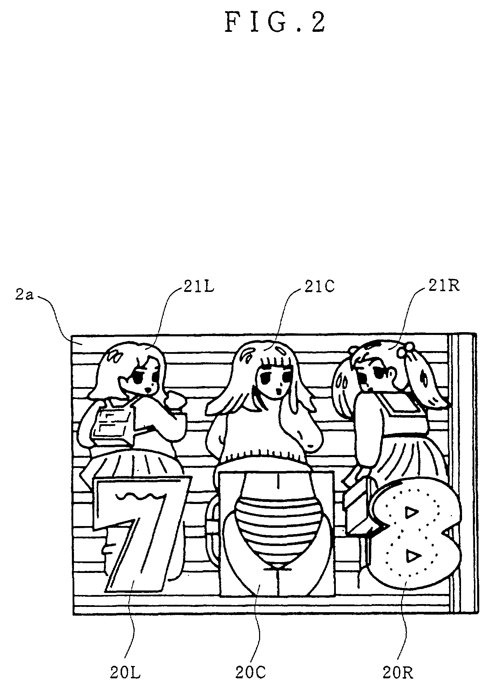

In this embodiment, as shown in Fig. 2, special symbols 20L, 20C, 20R are variably displayed in a lower portion of display screen 2a of the liquid crystal display 2. The prognostic demonstration and reach demonstration symbols are displayed in the other portion of the display screen. The special symbols 20L, 20C, 20R are displayed in response to electrical signals, thereby simulating symbols on three rows of rotatable reels of a slot machine. Prognostic or reach demonstration is illustrated by symbols, characters, animation and the like. Here, three girl characters 21L, 21C, 21R are displayed as prognostic demonstration symbols corresponding to special symbols 20L, 20C, 20R respectively, each of which is variably displayed.

The prognostic demonstration symbol is used for predicting that variations display of the special symbols 20L, 20C, 20R will be a reach state, or that display will be a predetermined pattern indicating "big hit", for example "7-7-7" when variation of display is stopped through a reach state. Such prognostic demonstration symbol is constituted so that the state of display can change to various patterns. The prognostic demonstration symbol (each character 21L, 21C, 21R of three girls) can be varied with display contents relevant each other. The likelihood of "big hit" and the probability of development into reach are different in accordance with contents of the relevance.

More specifically, corresponding to the variation display of special symbols 20L, 20C, 20R, facial expression and posture of the characters 21L, 21C, 21R as prognostic demonstration symbol are varied. The other symbols can be displayed corresponding to each of characters 21L, 21C, 21R, or the characters can be displayed to talk each other with words.

As for the variation of display states of such prognostic demonstration symbol, contents of the variation have relevance to relations among characters 21L, 21C, 21R The likelihood of "big hit" and the probability of the development into "reach" are different in accordance with contents of the relations. Accordingly, if a player recognizes what kind of relations the display of prognostic demonstration symbol is varied with, a player can predict in a certain degree whether the development into "reach" or the appearance of "big hit" will be expected.

Also, when the "reach" state is established, a reach demonstration symbol is displayed rather than a prognostic demonstration symbol as the demonstration display for information of the "reach" state. The reach demonstration symbol is displayed in different modes in accordance with the likelihood of "big hit".

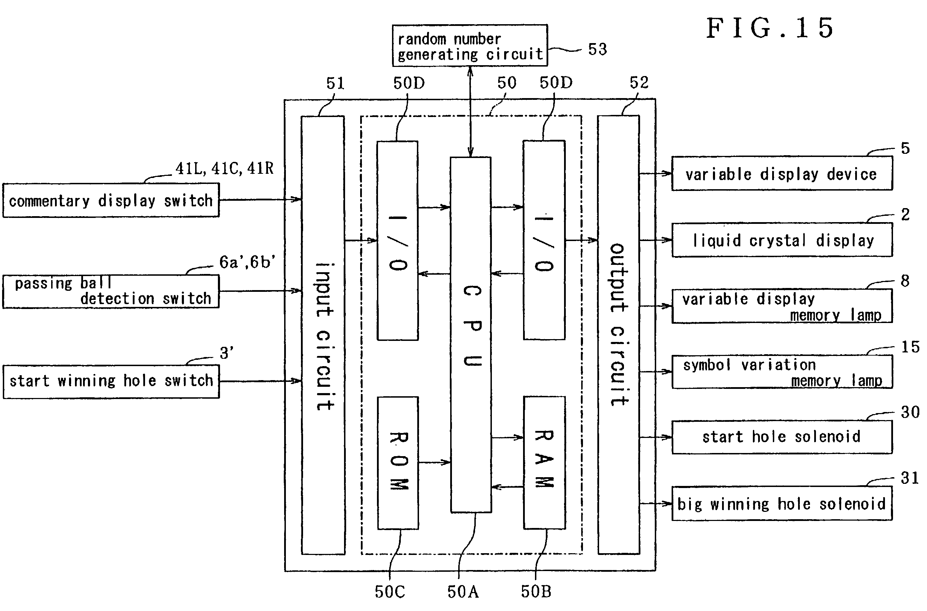

The above mentioned displays can be realized by storing a plurality of different prognostic and reach demonstration symbols corresponding to the likelihood of "big hit" and the probability of the development into "reach" in a memory (ROM 50C shown in Fig. 15).

As shown in Fig. 1 again, a start winning hole (that is, "starter hole") 3 is arranged below the liquid crystal display 2 for starting the symbol variation when a playing ball enters the start winning hole 3. The start winning hole 3 may be a variable winning device that is convertible between a first condition disadvantageous to a player and a second condition advantageous to a player. When a playing ball enters the start winning hole 3, a predetermined number of prize balls (for example, five balls) are paid.

A playing ball can enter the start winning hole 3 even when the hole is in the first condition disadvantageous to a player, because the start winning hole 3 has enough space for a playing ball to enter even in the first condition.

Four symbol variation memory lamps 15 are disposed above the liquid crystal display 2. The symbol variation memory lamps 15 are arranged to indicate the number of winning time of playing ball entered the start winning hole 3 up to four times during variation displayed in special symbols 20L, 20C, 20R of the display screen 2a. The symbol variation memory lamps 15 give a real time information of number of times of variation successively displayed by the liquid crystal display 2 to a player. The winning time more than five times are made ineffective for the starting condition of variation display.

Below the start winning hole 3 is provided a big winning hole (that is "attacker") 4 that can have a closed condition disadvantageous to a player and an opened condition advantageous to a player. The big winning hole 4 may be a door open/close type variable winning device that is converted to the opened condition when the variation display of the symbol in the display screen 2a of the liquid crystal display 2 is stopped in a specified symbol combination corresponding to the "big hit". When a playing ball enters the big winning hole 4, a predetermined number of prize balls (for example, fifteen balls) are paid. The special game state is a condition that the big winning hole 4 is opened and the variation time of symbol in liquid crystal display 2 is shortened so as to increase chance of enter to the start winning hole 3.

A variable display device 5 is disposed in the lower portion of the game board face 10. The variable display device 5 is arranged to start the variation display when a playing ball passes through a variable display actuation gate 6a or 6b disposed in left and right sides, respectively, of the liquid crystal display 2. When the variable display device 5 is stopped to display a predetermined special symbol, the start winning hole 3 is converted into the second condition that is advantageous to a player.

Four variable display memory lamps 8 are disposed around the variable display device 5. The variable display memory lamps 8 are arranged to indicate number of time of playing ball passing through a variable display actuation gate 6a or 6b up to four times. The variable display memory lamps 8 give to a player the information of number of times of variation successively displayed by the variable display device 5. The passing time more than five times are not counted and made ineffective.

The game board face 10 is further provided with windmills 11a, 11b that each have a lamp as a light emitting portion, and normal windmills 12a, 12b. The game board face 10 is further provided with usual winning holes 13a, 13b, 13c, 13d, 13f, 13g and game board side lamps 14a, 14b. Every time when a playing ball enters the usual winning hole, fifteen prize balls are paid.

The variable display device 5, the start winning hole 3, and the big winning hole 4 are integrated together with the usual winning holes 13f and 13g to form a unit for a variable winning ball device 9 that is arranged on the game board face 10.

Further, in the liquid crystal display 2, commentary information about a game is displayed as well as symbol display such as special symbols 20L, 20C, 20R and the prognostic demonstration symbol. For example, the commentary information is explanation about the prognostic and reach demonstration symbols, or explanation about a flow of the whole game and the like.

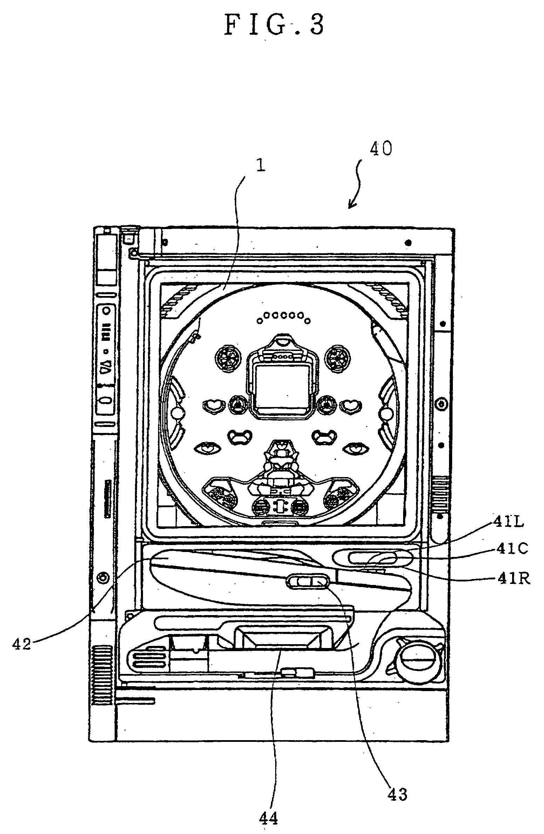

The commentary information about a game in this liquid crystal display 2 can be displayed by operating a predetermined display instruction means. As the display instruction means, commentary display switches 41L, 41C, 41R that can cause display of commentary information and change of display contents by push operation are provided. The commentary display switches 41L, 41C, 41R are each arranged in the right-side end of an upper tray 42 provided in a middle position of the body of pachinko game machine 40 as shown in Fig. 3.

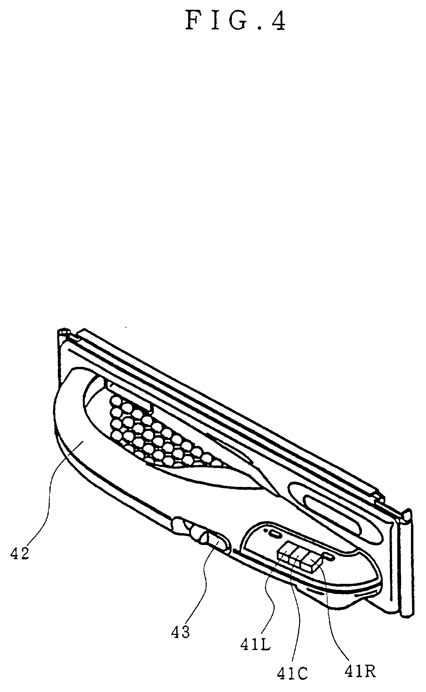

Fig. 4 shows the upper tray 42 viewed from upper part. The upper tray 42 is arranged as a saucer for receiving playing balls that have been paid out The playing balls collected in the upper tray 42 are dropped to a lower tray 44 by a player's operation of a ball-out lever 43. Because this operation is done frequently, the lever 43 is disposed in a position to be operated with ease. Also, the commentary display switches 41L, 41C, 41R are arranged in a position to be operated easily by a player, thus the player can easily operate for displaying the commentary information.

The commentary information includes a plurality of display contents, and contents of commentary information displayed in response to each of the commentary display switches 41L, 41C, 41R are different each other.

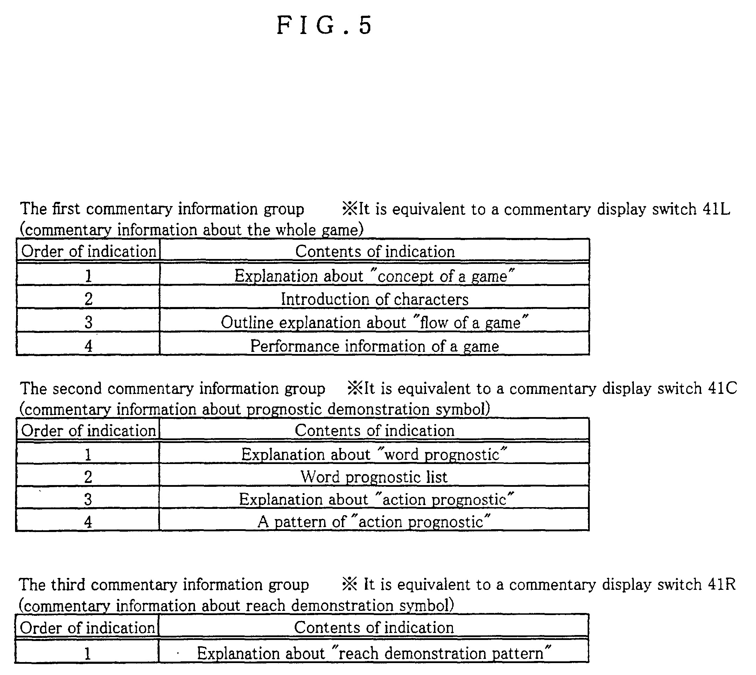

The commentary information is classified to three groups that are of "commentary about the whole game", "commentary about prognostic demonstration symbol " and "commentary about reach demonstration symbol". Each of three commentary information groups consists of a plurality of commentary information as shown in Fig. 5, and is stored in ROM 50C shown in Fig. 15.

Each of the commentary display switches 41L, 41C, 41R corresponds to each of three commentary information groups, and can change the display contents in order of numbers shown in Fig. 5 by the pushing operation of each switch. Display contents of the first commentary information group shown in Fig. 5 are displayed in the display screen 2a in order by push operation of commentary display switch 41L. Display contents of the second commentary information group shown in Fig. 5 are displayed in the display screen 2a in order by push operation of commentary display switch 41C. Display contents of the third commentary information group shown in Fig. 5 are displayed in the display screen 2a by push operation of commentary display switch 41R.

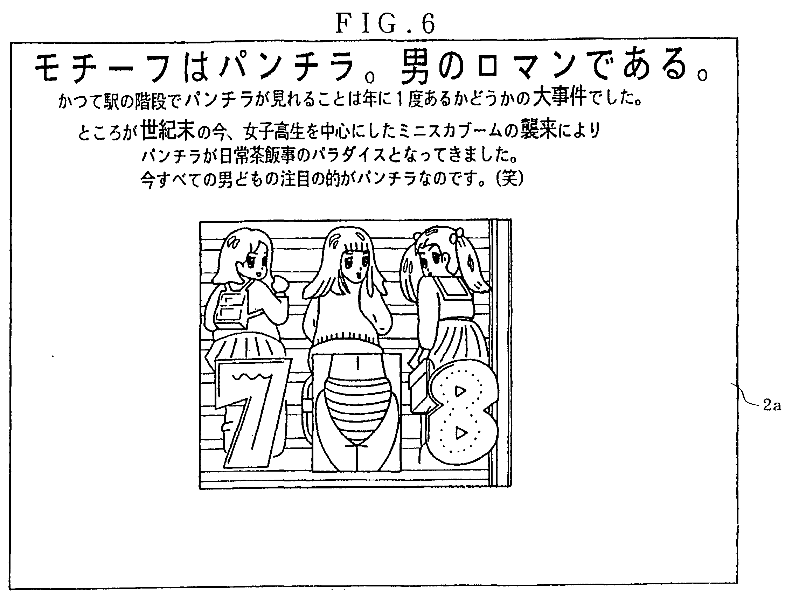

Figs. 6 to 12 show examples of display contents of Fig. 5.

First, referring to Figs. 6 to 9, the first commentary information group of Fig. 5 that is "commentary information about the whole game" displayed by operation of commentary display switch 41L will be explained.

Fig. 6 shows display explanation about "concept of game". According to this display, interests to a game displayed on the display screen 2a can be increased, and an advertising effect to hold interests to the gaming machine can be expected for a beginner.

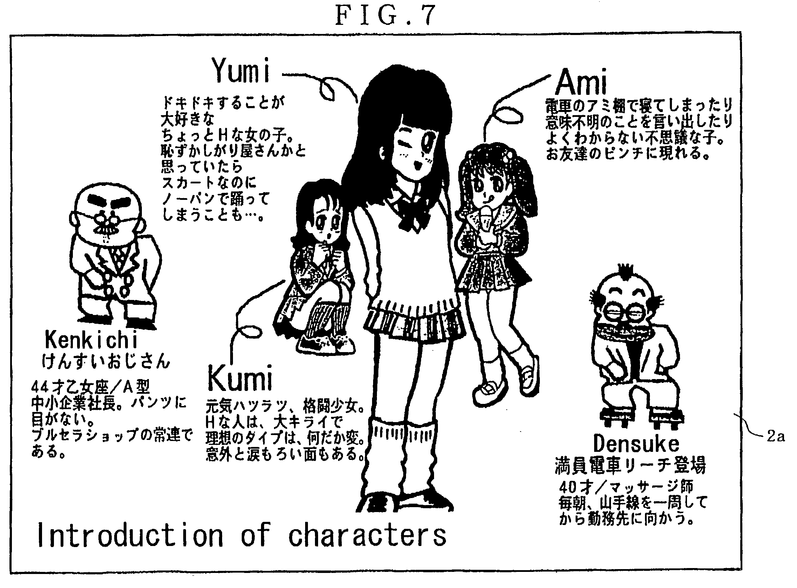

Fig. 7 shows display "introduction of character" appearing in the game displayed on the display screen 2a. According to this display, a player can have a good understanding of characters appearing in a game to be played from now on and also have a friendly feeling to each character to attend a game. The player's interest to a game increases still more.

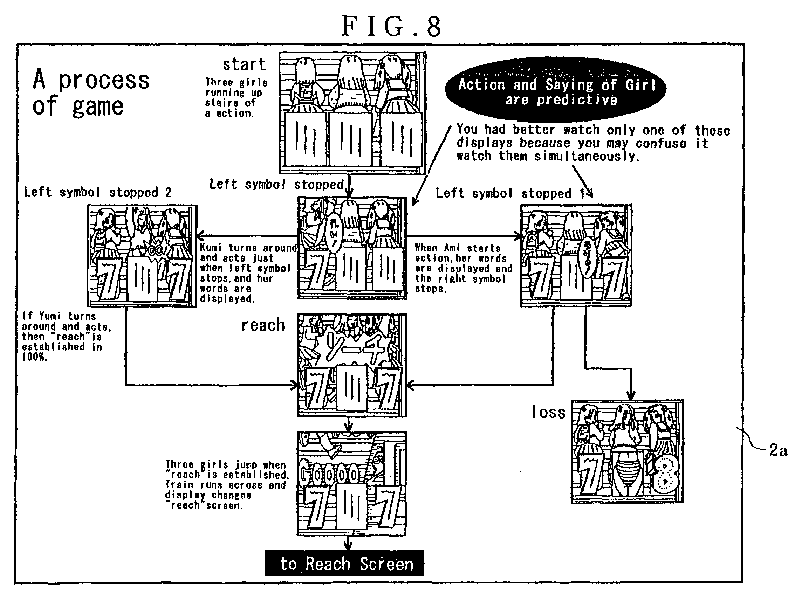

Fig. 8 shows display outline explanation about "flow of game" to be played on the display screen 2a. According to this display, a player can easily grasp an outline about the flow of the whole game to be displayed on the display screen 2a, such as timing when prognostic display appears.

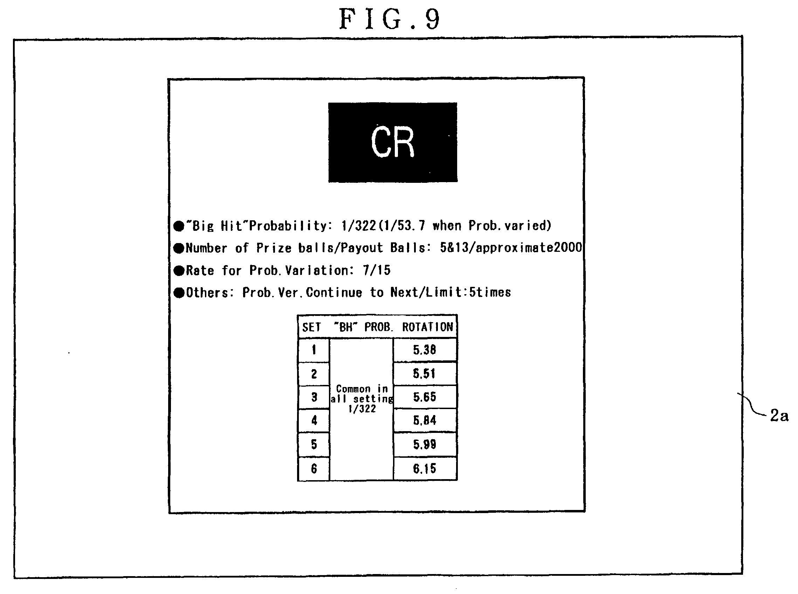

Fig. 9 shows display of "performance information of game". According to this display, a player can easily understand a difference of performance with other gaming machines. This display is useful in selection of gaming machine.

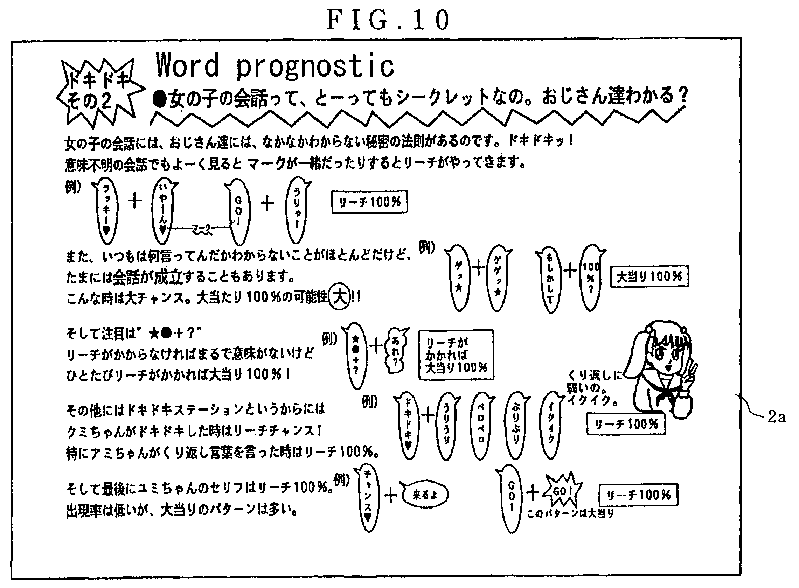

Next, referring to Figs. 10 to 13, the second commentary information group of Fig. 5 that is "commentary information about prognostic demonstration symbol" displayed by operation of commentary display switch 41C will be explained.

In the example, the prognostic demonstration symbol consists of "word prognostic" and "action prognostic". The "word prognostic" is a prognostic display in which each of three girl characters 21L, 21C, 21R shown as the prognostic demonstration symbol in Fig. 2 talks each other. For example, sayings or words are displayed by symbols or characters. Also, they may be expressed by sound.

The "action prognostic" is a prognostic display in which three girl characters take any action. For example, "action" is variation of facial expression of characters, variation of posture and the like. The "action prognostic" can be displayed usually in combination with the "word prognostic".

Fig. 10 shows display explanation about the "word prognostic". According to this display, a player can grasp an outline about prognostic contents meant by sayings that each of three girl characters 21L, 21C, 21R as the prognostic demonstration symbol tells.

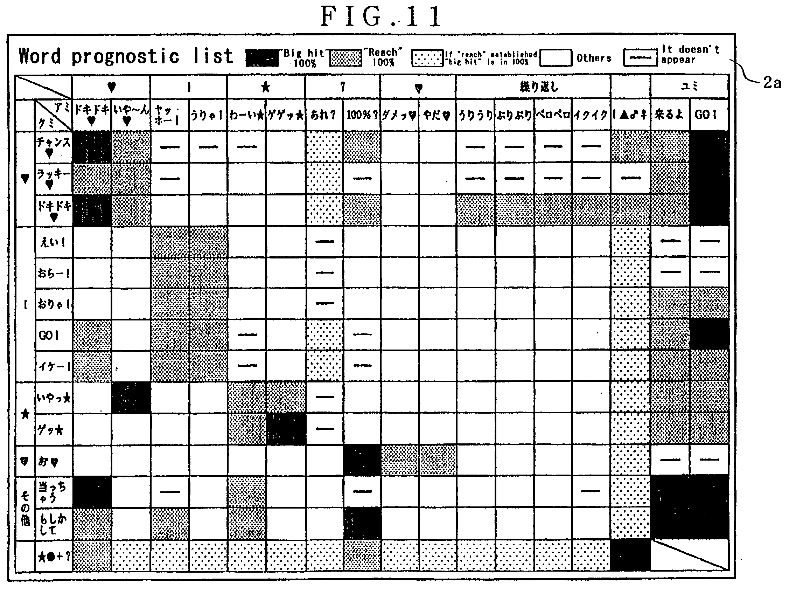

Fig. 11 shows display explanation about the likelihood of "big hit" and the probability of the development to "reach" that the "word prognostic" predicts. It shows by a matrix the likelihood of "big hit" and the probability of development to "reach" which are different in combination of "word prognostic" that three girl characters tell each other.

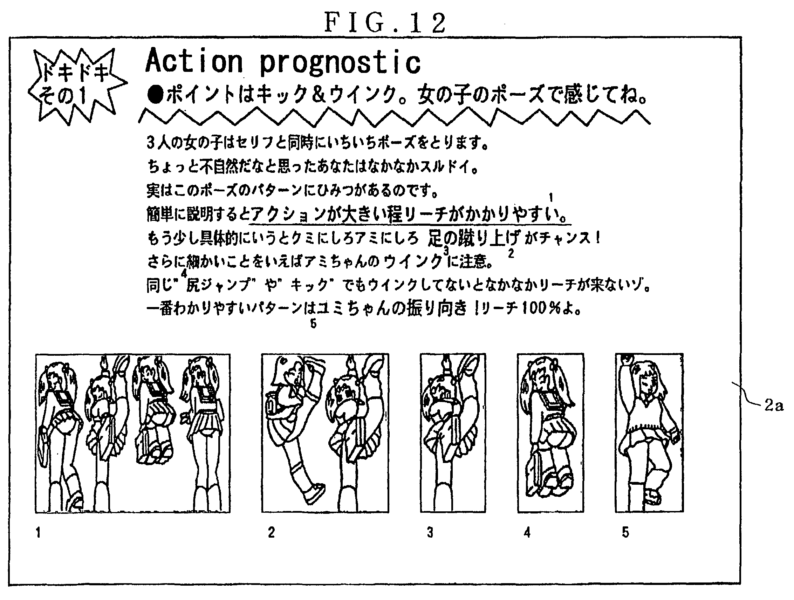

Fig. 12 shows display explanation about the "action prognostic". According to this display, a player can grasp an outline about the predictive contents meant by changes of action that each of three girl characters 21L, 21C, 21R as the prognostic demonstration symbol takes.

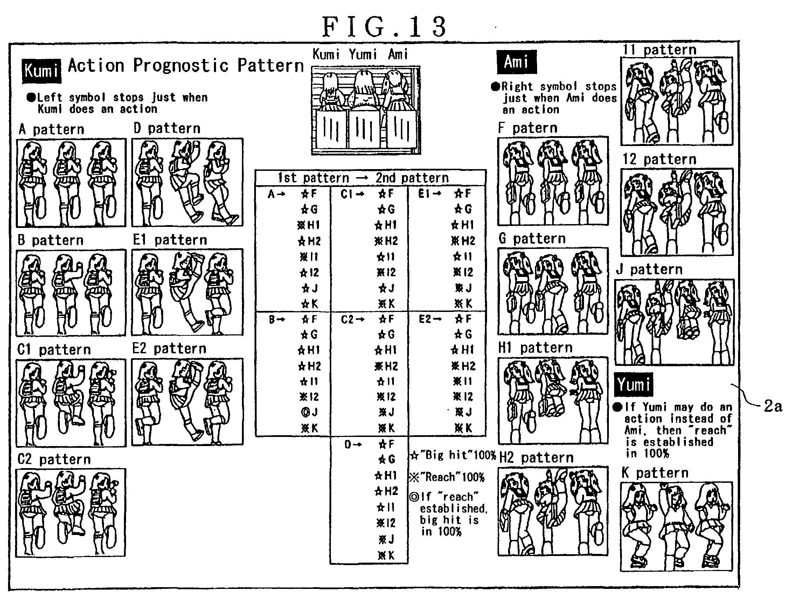

Fig. 13 shows display explanation about the likelihood of "big hit" and the probability of the development into "reach" that the "action prognostic" predict. It shows kinds of "action prognostic" to be displayed, and it also shows the likelihood of "big hit" and the probability of the development into "reach" that are different in combination of "action prognostic" to be displayed.

According to the display for explanation of the prognostic demonstration mentioned above, even if the prognostic demonstration is displayed as complicated combination of symbols, a player can easily understand about the likelihood of "big hit" and the probability of the development to "reach" which are indicated by the prognostic demonstration.

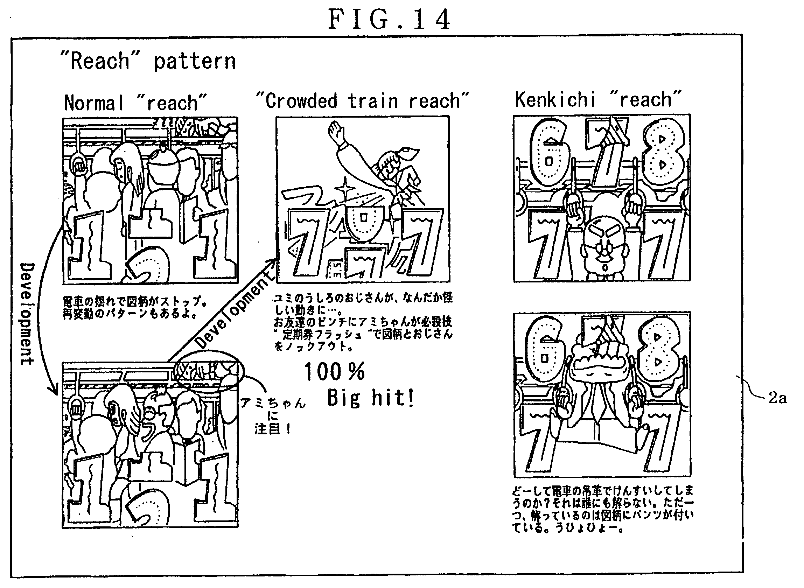

Next, referring to Fig. 14, the third commentary information group of Fig. 5 that is "commentary information about "reach demonstration symbol" displayed by operation of commentary display switch 41R will be explained.

Fig. 14 shows display of explanation about "reach demonstration symbol". It explains a summary of each "reach demonstration symbol" that is displayed per a kind. According to this display, a player can understand sufficiently about progress patterns of each reach demonstration symbol and differences of the likelihood of "big hit" indicated by the progress pattern so that the player can attend a game.

The display of the commentary information becomes very useful when a player can not understand meaning of the display contents during a game on the display screen 2a. In other words, by operating the commentary display switches 41L, 41C, 41R, the player can advance a game while appropriately referring to the commentary information about the display contents that the player could not understand.

Further, a player can have an understanding of the contents on the display screen 2a if the player will play games repeatedly with reference of the commentary information. In other words, the player can pursue relations between the contents of the prognostic display on the display screen 2a and result of the game. For a beginner, it is not necessary to acquire game experiences to understand a process of game and he or she can have a good understanding of a process of game to attend the game by referring to the commentary information in advance.

The commentary information about a game in the liquid crystal display 2 may be displayed in a predetermined time interval when the game is not carried. Also, the game in liquid crystal display 2 may start the display of commentary information when a game is not carried continuously in a predetermined time, and may stop the display of commentary information when a game is started.

Next, the game control of the above pachinko game machine will be explained. The pachinko game machine is provided with a microcomputer as a controller for controlling the whole game procedure. The controller used in the embodiment also substantially consists of a microcomputer as shown in block diagram of Fig. 15.

The microcomputer 50 consists of CPU 50A, RAM 50B, ROM 50C and general-purpose I/O 50D. It can process various input signals from input circuit 51 according to a program stored in ROM 50C, and send out output signals from output circuit 52 to each drive means at need.

In a process of game CPU 50A executes various determinations. For example, it determines symbol combination (hereafter "stop symbols") when the variation display of the special symbols 20L, 20C, 20R of the display screen 2a is stopped, and it determines the display states of "reach" demonstration symbol and prognostic demonstration symbol to be displayed. A random number generating circuit 53 that generates random numbers is connected to CPU 50A. CPU 50A extracts a random number generated by the circuit 53 and executes each of the various demonstrations based on a value of the random number extracted. As to random number generating means, it is not limited to the external random number generating circuit 53 but it may be an internal means that generates random numbers on a program in CPU 50A.

Also, when input signals are produced in response to push operation of the commentary display switches 41L, 41C or 41R, CPU 50A selects a commentary information group corresponding to the commentary display switch that is operated from three commentary information groups (Fig. 5) stored in ROM 50C. Then, CPU 50A selects one commentaty information in the next order of the commentary information that has been displayed last and produces output signals of the commentary information to be displayed from the output circuit 52 to the liquid crystal display 2.

To the input circuit 51 are connected passing ball detection switches 6a', 6b' for generating a signal when a playing ball passes through the variable display actuation gates 6a, 6b, and a starting winning switch 3' for generating a signal when a playing ball enters the start winning hole 3, and the like. On the other hand, to the output circuit 52 are connected the variable display device 5, the liquid crystal display 2, the variable display memory lamps 8, the symbol variation memory lamps 15, a start winning hole solenoid 30 for actuating the conversion of the start winning hole 3, a big winning hole solenoid 31 for actuating the conversion of the big winning hole 4, and the like.

As the display arrangement, there may be used electrical display devices such as a display device constituted by arrangement of many LED's, a CRT, a plasma display, or an electroluminescence display as well as the liquid crystal display.

Though the embodiments are directed to the pachinko game machine, the present invention can be applied to other gaming machines such as TV gaming machines having electric display device and other display device as well.

## Claims

1. A gaming machine (1,40) having a display arrangement (2) for displaying symbols related to a game, the symbols including varying special symbols (20L, 20C, 20R) for indicating transfer to special game state when the varying special symbols stop to produce a predetermined stop pattern, wherein
the display arrangement (2) is arranged to display not only the symbols but also commentary information of the game;
said symbols include predictive symbols (21 L, 21C, 21R) for predicting appearance of the stop pattern;
**characterised in that** the commentary information comprises a plurality of display contents that can be changed by a predetermined display instruction;
the gaming machine further comprising a plurality of switches (41L, 41 C, 41R) which produce said display instruction.

2. The gaming machine of claim 1, wherein the commentary information is displayed in a predetermined time interval when the game is not carried out in the display arrangement (2).

3. The gaming machine of claim 1, wherein the display arrangement (2) starts display of the commentary information when the game is not carried continuously in a predetermined time period and the display arrangement stops the display of the commentary information when the game is started.

4. The gaming machine of any one of the preceding claims, wherein the commentary information is any one of performance of the game, explanation about a concept of the game, explanation about a process of the game, explanation about prognostic display, explanation about reach display, explanation about likelihood of "big hit" that is indicated by the prognostic display and the reach display, explanation about symbols to be displayed, and other information of the game.

## Patentansprüche

1. Spielmaschine (1, 40), aufweisend eine Anzeigeanordnung (2) zum Anzeigen von Symbolen, die mit einem Spiel verbunden sind, wobei die Symbole wechselnde besondere Symbole (20L, 20C, 20R) beinhalten, um einen Übergang zu einem besonderen Spielzustand anzuzeigen, wenn die Wechselnden besonderen Symbole anhalten, um vorherbestimmtes Muster zu erzeugen, wobei
die Anzeigeanordnung (2) eingerichtet ist, um nicht nur die Symbole, sondern auch erläuternde Informationen zum Spiel anzuzeigen;
die Symbole vorhersagende Symbole (21 L, 21 C, 21 R) beinhalten, um das Erscheinen des Anhaltemusters vorherzusagen;
**dadurch gekennzeichnet, daß** die erläuternden Informationen mehrere Anzeigeinhalte umfassen, die durch eine vorherbestimmte Anzeigeanweisung verändert werden können;
die Spielmaschine ferner mehrere Schalter (41L, 41 C, 41 R) umfaßt, die diese Anzeigeanweisung erzeugen.

2. Spielmaschine nach Anspruch 1, wobei die erläuternden Informationen in einem vorherbestimmten Zeitabstand angezeigt werden, wenn das Spiel nicht in der Anzeigeanordnung (2) ausgeführt wird.

3. Spielmaschine nach Anspruch 1, wobei die Anzeigeanordnung (2) das Anzeigen der erläuternden Informationen beginnt, wenn das Spiel in einem vorherbestimmten Zeitraum nicht ununterbrochen ausgeführt wird, und die Anzeigeanordnung die Anzeige der erläuternden Informationen anhält, wenn das Spiel begonnen wird.

4. Spielmaschine nach einem der vorhergehenden Ansprüche, wobei die erläuternden Informationen jede beliebigen aus der Durchführung des Spiels, der Erklärung eines Konzepts des Spiels, der Erklärung eines Prozesses des Spiels, der Erklärung einer prognostischen Anzeige, der Erklärung einer Erreichensanzeige, der Erklärung der Wahrscheinlichkeit eines "großen Treffers", der durch die prognostische Anzeige und die Erreichensanzeige angezeigt wird, der Erklärung von anzuzeigenden Symbolen, und anderen Informationen des Spiels sind.

## Revendications

1. Machine de jeu (1, 40) ayant un équipement d'affichage (2) pour afficher des symboles relatifs à un jeu, les symboles incluant des symboles spéciaux variables (20L, 20C, 20R) pour indiquer un transfert vers un état de jeu spécial lorsque les symboles spéciaux variables arrêtent de produire un motif d'arrêt prédéterminé, dans laquelle
l'équipement d'affichage (2) est conçu pour afficher non seulement les symboles mais également des informations de commentaires du jeu,
lesdits symboles incluent des symboles de prédiction (21L, 21C, 21R) pour prévoir l'apparition du motif d'arrêt,
**caractérisée en ce que** les informations de commentaires comportent une pluralité de contenus d'affichage qui peuvent être changés par l'intermédiaire d'une instruction d'affichage prédéterminée,
la machine de jeu comportant en outre une pluralité de commutateurs (41L, 41C, 41R) qui produisent ladite instruction d'affichage.

2. Machine de jeu selon la revendication 1, dans laquelle les informations de commentaires sont affichées selon un intervalle de temps prédéterminé lorsque le jeu n'est pas actionné dans l'équipement d'affichage (2).

3. Machine de jeu selon la revendication 1, dans laquelle l'équipement d'affichage (2) commence l'affichage des informations de commentaires lorsque le jeu n'est pas actionné continuellement dans une période de temps prédéterminée et l'équipement d'affichage arrête l'affichage des informations de commentaires lorsque le jeu est commencé.

4. Machine de jeu selon l'une quelconque des revendications précédentes, dans laquelle les informations de commentaires sont l'une quelconque parmi les performances du jeu, une explication concernant un concept du jeu, une explication concernant un processus du jeu, une explication concernant un affichage de pronostics, une explication concernant un affichage d'approche, une explication concernant une probabilité de "gros lot" qui est indiquée par l'affichage de pronostics et l'affichage d'approche, une explication concernant des symboles à afficher, et d'autres informations du jeu.
